# EUROPEAN PATENT SPECIFICATION

(11) **EP 2 797 256 B1**
(45) Date of publication and mention of the grant of the patent: **16.09.2015**
(21) Application number: 13193498.6
(22) Date of filing: 19.11.2013
(51) Int. Cl.: H04L 12/24

(54) **Method for repairing an access device failure**
Verfahren zur Reparatur des Versagens einer Zugriffsvorrichtung
Procédé pour réparer une panne de dispositif d'accès

(30) Priority: 25.04.2013 TW 102114888
(43) Date of publication of application: 29.10.2014
(73) Proprietor: Compal Broadband Networks Inc., 114 Taipei City (TW)
(72) Inventor: Chang, Lung-Pin, 208 New Taipei City (TW)
(74) Representative: Becker Kurig Straus

(56) References cited:
- US-A1- 2008 307 488
- US-A1- 2009 064 251
- US-A1- 2010 162 036
- US-A1- 2010 180 144

## Description

### Field of the Invention

The invention relates to a method for repairing a failure condition, and especially relates to a method capable of checking an operating state of an access device in a network access system for rapidly repairing an access device failure.

### Background of the Invention

People may easily and rapidly transmit various data and messages to share knowledge with each other by the Internet. When a user want to connect with the Internet, the user is required to connect to a service system provided by a service through an access device (i.e. commonly known as a modem), so as to connect to the Internet. According to the different service systems provided by the services, the corresponding access devices are utilized for connecting with the service systems to access the Internet, such as a telephone modem utilized for a telephone system and a cable modem utilized for a cable system.

In the prior art, when components of the access device are damaged or configuration of the access device is wrong, a network access system formed by the access device and the service may not properly work, and the user cannot connect to the Internet.

Document US 20090064251 A1 discloses a method for troubleshooting a set top box. According to the method disclosed, when a trouble ticket from the set top box is received at a repair center, a self test command can be sent to the set top box. However, this document fails to explicitly specify how the repair center gets the trouble ticket when network connection issues occur and how to transmit the self test command if the modem cannot communicate with the set top box.

Since the user cannot access the Internet, a failure condition is usually obtained by communicating with a telephone between the user and the service. In this case, the user, who is a computer illiterate, may suffer to explain the failure condition or even to figure out device information such as a serial number of the set top box. To save negotiation efforts, the service sends someone to check the access device, so as to configure or replace the access device for repairing the failure condition. Under such a condition, a lot of time and cost is lost to the user and the service, which is very inconvenient. Thus, there is a need to provide a method for rapidly repairing the access device failure.

### Summary of the Invention

The present invention aims at providing a method capable of checking an operating state of an access device in a network access system for rapidly repairing a failure condition of the access device.

This is achieved by a method for repairing a failure condition of an access device according to claim 1, and an electronic device according to claim 8. The dependent claims pertain to corresponding further developments and improvements.

As will be seen more clearly from the detailed description following below, the claimed method is utilized for repairing a failure condition of an access device, wherein the access device is utilized in a network access system. The method comprises executing an application program in an electronic device; the application program obtaining a device information of the access device and establishing a control connection with the access device according to the device information; the application program establishing a service connection with a service terminal of the network access system and transmitting the device information to the service terminal; and the application program transferring an operating information transmitted from the service terminal to the access device and transferring a response information transmitted from the access device to the service terminal by the control connection and the service connection; wherein the service terminal transmits the operating information and receives the response information to check and control the access device according to the device information, so as to repair the failure condition.

In another aspect, as will be seen more clearly from the detailed description following below, the claimed electronic device comprises a processor; and a storage device for storing a program code for indicating to the processor to perform a method for repairing an access device failure, wherein the access device is utilized for a network access system. The method comprises obtaining a device information of the access device and establishing a control connection with the access device according to the device information; establishing a service connection with a service terminal of the network access system and transmitting the device information to the service terminal; and transferring an operating information transmitted from the service terminal to the access device and transferring a response information transmitted from the access device to the service terminal by the control connection and the service connection; wherein the service terminal transmits the operating information and receives the response information to check and control the access device according to the device information, so as to repair the failure condition.

### Brief Description of the Drawings

The invention is further illustrated by way of example with reference to the accompanying drawings. Thereof,
FIG. 1 is a schematic diagram of a detection system according to an embodiment of the present invention,
FIG. 2 is a schematic diagram of an electronic device in FIG. 1,
FIG. 3 is a schematic diagram of a process according to an embodiment of the present invention.

### Detailed Description

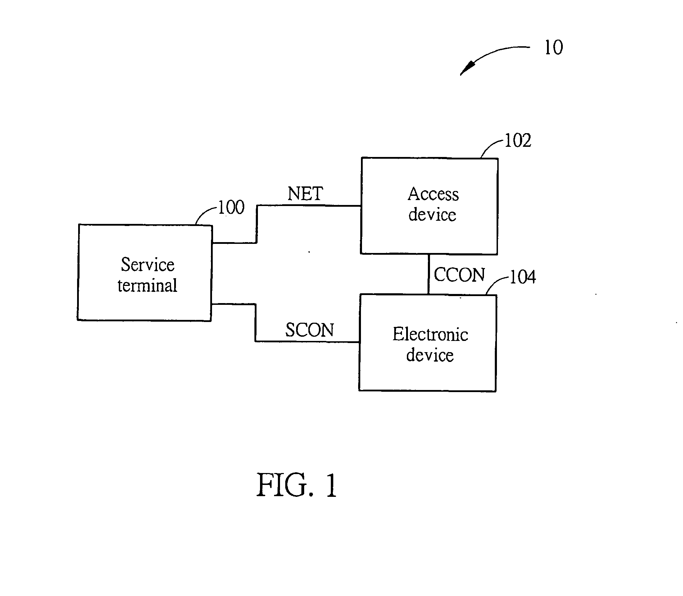

FIG. 1 is a schematic diagram of a detection system 10 according to an embodiment of the present invention. As shown in FIG. 1, the detection system 10 includes a service terminal 100, an access device 102, and an electronic device 104. The service terminal 100 provides a service for connecting to Internet, and the access device 102 utilizes a transmission line NET to connect with the service terminal 100, so as to access the service provided by the service terminal 100. A user accesses the Internet through the access device 102 to form a network access system, wherein the network access system may be a cable access system or a telephone access system, etc. For example, when the network access system is the cable access system, the access device 102 and the transmission line NET are respectively a cable modem and a cable. Then, the user requires communicating with the service terminal 100 by the cable modem and the cable to access the Internet through the service terminal 100.

The electronic device 104 may be a smart phone, a tablet, or other devices which have a mobile communication capability. For example, when the electronic device 104 is the smart phone utilized in a mobile communication system, the user may connect to the Internet by the mobile communication capability of the electronic device 104 according to a mobile communication standard. As a result, the electronic device 104 may establish a service connection SCON with the service terminal 100 to communicate with the service terminal 100. Furthermore, the electronic device 104 also has wireless or wired transmission capabilities to communicate with the access device 102 also having the wireless or wired transmission capabilities. The electronic device 104 utilizes the wireless transmission according to a Wi-Fi™ standard or the wired transmission according to an Ethernet network standard to establish a control connection CCON based on a network transmission protocol, so as to communicate with the access device 102.

Under such a condition, the detection system 10 may utilize the electronic device 104 to communicate with the service terminal 100 through the service connection SCON and communicate with the access device 102 through the control connection CCON. Then, the electronic device 104 executes an application program to transfer and transmit an operating information from the service terminal 100 to the access device 102, wherein operating information is utilized for checking the access device 102, such as fetching a configuration or an operating state of the access device 102. After the access device 102 receives the operating information, the access device 102 performs corresponding operations and generates a response information to transmit to the electronic device 104. Finally, the electronic device 104 similarly transfers and transmits the response information from the access device 102 to the service terminal 100 by the application program.

As a result, when the access device 102 presents a failure condition, the service terminal 100 may transmit the operating information and receive the response information in the detection system 10 to obtain a detection result of the access device 102. Then, the failure condition of the access device 102 may be rapidly repaired by updating firmware of the access device 102 or replacing the access device 102. In other words, when the user cannot connect to the Internet through the access device 102, the user may utilize the electronic device 104 to establish the detection system 10, such that the service terminal 100 may check the configuration and the operating state of the access device 102 by the detection system 10 to determine reasons for the failure condition. Thus the failure condition is rapidly repaired while saving time and costs.

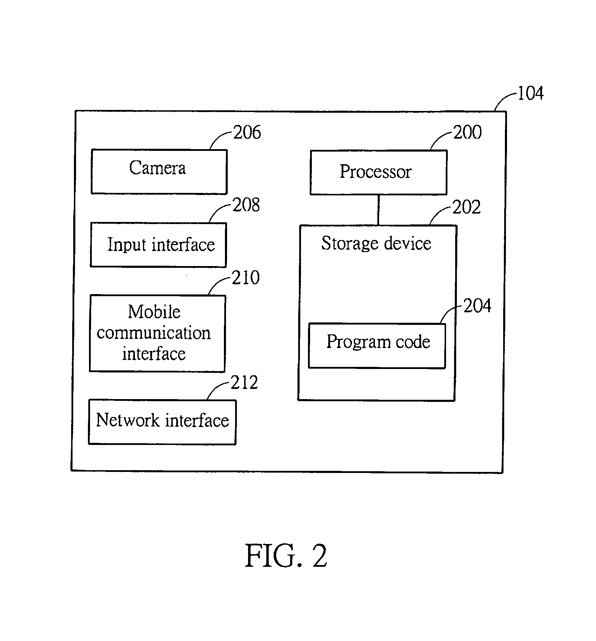

The electronic device 104 having the mobile communication capability and the wireless or the wired communication capability is not limited to the above embodiment. FIG. 2 is a schematic diagram of the electronic device 104 in FIG. 1. As shown in FIG. 2, the electronic device 104 includes a processor 200, a storage device 202, a camera 206, an input interface 208, a mobile communication interface 210, and a network interface 212. The processor 200 may be a microprocessor or an application-specific integrated circuit (ASIC). The storage device 202 may be any data storage device for storing a program code 204 fetched and executed by the processor 200. For example, the storage device 202 may be a read-only memory (ROM), a random-access memory (RAM), a CD-ROM, a magnetic tape, a floppy disk, or an optical data storage device, etc, and is not limited herein.

The camera 206 is configured for capturing an image. The input interface 208 may be a wireless or a wired keyboard, a touch screen, a handwriting pad, a menu, or hardware and software capable of receiving and recognizing a voice, etc. The mobile communication interface 210 is implemented by a wireless transceiver and hardware or software for modulating and demodulating, and the mobile communication interface 210 may perform the mobile communication according to the mobile communication standard, such that the electronic device 104 has the mobile communication capability and may be utilized in the mobile communication system. The network interface 212 may be a wireless transmission interface according to the Wi-Fi™ standard (i.e. complying with the IEEE 802.11 standard) or a wired transmission interface according to the Ethernet network standard, and the network interface 212 may be implemented by an internal program or hardware based on the network transmission protocol, such that the electronic device 104 has the wireless or wired communication capability.

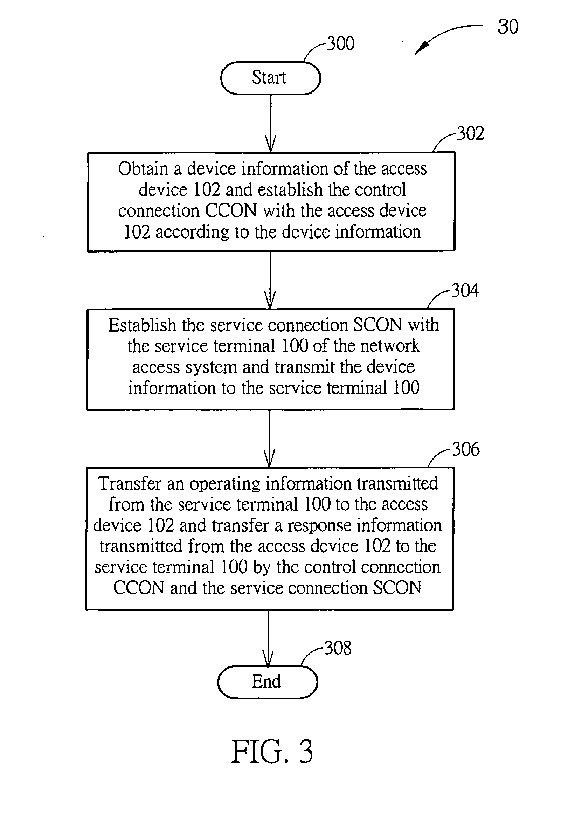

The electronic device 104 may execute an application program to simultaneously communicate with the service terminal 100 and the access device 102 in the detection system 10. Furthermore, the electronic device 104 transfers the information between the service terminal 100 and the access device 102 to help the service terminal 100 checking the operating state of the access device 102. FIG. 3 is a detailed schematic diagram of a process 30 according to an embodiment of the present invention. In the embodiment, the process 30 is compiled as the program code 204 stored in the storage device 202 of the electronic device 104 to indicate to the processor 202 for performing the process 30. As shown in FIG. 3, the process 30 includes the following steps:
- Step 300:: start.
- Step 302:: obtain a device information of the access device 102 and establish the control connection CCON with the access device 102 according to the device information.
- Step 304:: establish the service connection SCON with the service terminal 100 of the network access system and transmit the device information to the service terminal 100.
- Step 306:: transfer an operating information transmitted from the service terminal 100 to the access device 102 and transfer a response information transmitted from the access device 102 to the service terminal 100 by the control connection CCON and the service connection SCON.
- Step 308:: end.

According to the process 30, after the service terminal 100 receives the device information transmitted from the electronic device 104, the service terminal 100 transmits the operating information to the electronic device 104. Then, the electronic device 104 transfers the operating information to the access device 102, and the service terminal 100 may receive the response information transmitted from the access device 102 by the electronic device 104 to check and control the access device 102, such as configuring the access device 102 or updating the firmware of the access device 102, so as to repair the failure condition.

In detail, in step 302, the electronic device 104 utilizes the input interface 208 to receive the device information of the access device 102 manually inputted by the user, such as inputted by the keyboard, inputted by the touch panel keyboard, or inputted by voice, etc. In addition, the electronic device 104 may also utilize the camera 104 to capture a device text data stuck or marked on the access device 102 to be an image, and then the electronic device 104 analyze the image to obtain the device information by utilizing the software or hardware. The device information is a serial number of the access device 102 to represent a unique number of the access device 102. The device information is utilized for informing the service terminal 100 and the electronic device 104 to connect to which device for correctly and safely checking and controlling the access device 102. Noticeably, the device information may also include information for performing security verification or information for repairing the failure condition according to actual requirements. Next, the electronic device 104 may utilize the network interface 212 to communicate with the access device 102 based on the network transmission protocol according to the device information, such as communicating by the wireless transmitting according to the IEEE 802.11 standard or by the wired transmitting according to the Ethernet network standard.

Additionally, for a consideration of the security of access device 102, the electronic device 104 previously stores a security information of the access device 102 for performing security verification with the access device 102 to ensure that the access device 102 may be checked and controlled. The method of the security verification may be according to a Wi-Fi™ protected access (WPA) standard, or the method may also be implemented by utilizing an encryption computation and a decryption computation with a public private key according to actual requirements, which is not limited.

The electronic device 104 may communicate with the access device 102 by transmitting information to the access device 102 to activate a manage mode of the access device 102. In the manage mode, which may be thought of as an administrator logging onto the access device 102, the access device 102 may be configured and the firmware of the access device 102 may be updated. That is, the access device 102 may be controlled by the operating information transmitted from the service terminal 100, and the control connection CCON is successfully established between the electronic device 104 and the access device 102 to transfer the operating information to the access device 102.

In step 304, the electronic device 104 utilizes the mobile communication interface 210 to transmit data in the mobile communication system according to the mobile communication standard, and the electronic device 104 may access the Internet and establish the service connection SCON with the service terminal 100 to transmit the device information to the service terminal 100 through the service connection SCON.

In step 306, since the service terminal 100 may communicate with the electronic device 104 through the service connection SCON, the service terminal 100 may transmit the operating information for checking and controlling the access device 102 to the electronic device 104. After the electronic device 104 receives the operating information, the electronic device 104 transfers the operating information to a format suitable for transmitting by the control connection CCON according to the different transmission standards of the control connection CCON and the service connection SCON, so as to transmit to the access device 102.

On the other hand, after the access device 102 receives the operating information, the access device 102 generates the response information corresponding to the operating information, and the access device 102 transmits the response information to the electronic device 104 by the control connection CCON. Then, the electronic device 104 transfers the response information to a format suitable for transmitting by the service connection SCON to transmit to the service terminal 100. Thereby, the service terminal 100 may receive the response information corresponding to the operating information to check the operating state and the configuration of the access device 102, and the service terminal 100 may re-configure the access device 102 or update the firmware of the access device 102 to repair the access device 102 failure.

In other words, the present invention utilizes the electronic device 104 to perform the process 30 by the application program to establish the detection system 10 in the network access system. In the detection system 10, another connection may be established between the service terminal 100 and the access device 102 to replace the original accessing connection. Thus, when the access device 102 presents a failure condition due to damaged components or the wrong configuration and the access device 102 cannot access the network, the service terminal 100 may check the operating state of the access device 102 through the new connection. Thereby, the service terminal 100 may determine the possible conditions of the failure and decide whether to send someone to repair the failure condition for saving the time and cost.

Specifically, in the present invention, the service terminal 100 checks and controls the access device 102 by utilizing a mobile communication device or other devices capable of communicating with the service terminal 100 and the wireless communication capability of the access device 102. When the access device 102 presents a failure, the operating state and the configuration of the access device 102 may be determined, so as to decide the method for repairing the failure. Those skilled in the art can make modifications or alterations accordingly. For example, in the embodiment, the electronic device 104 first establishes the control connection CCON with the access device 102 and the electronic device 104 establishes the service connection SCON with the service terminal 100. In other embodiments, the electronic device 104 may also first establishes the service connection SCON with the service terminal 100 and the electronic device 104 establishes the control connection CCON with the access device 102. The operating sequence of the process 30 in the embodiment may be adjusted and integrated according to the actual conditions, which are not limited.

Furthermore, in the embodiment, the service terminal 100 activates the access device 102 for being controlled by the electronic device 104 performing the security verification with the access device 102 according to the previously stored security information of the access device 102 to ensure that the access device 102 may be safely checked and controlled. In other embodiments, the service terminal 100 may also directly perform the security verification with the access device 102 according to an encryption computation and a decryption computation to ensure that the access device 102 may be safely controlled and configured, which can make different alterations accordingly.

Additionally, in the embodiment, the electronic device 104 has the mobile communication capability to communicate with the service terminal 100, and the communication methods are not limited. In other embodiments, the electronic device 104 may also communicate with the service terminal 100 by non-mobile communication. For example, the electronic device 104 may communicate with other devices, which are capable of communicating with the service terminal 100, by a Bluetooth transmission to communicate with the service terminal 100. Any communication methods capable of communicating with the service terminal 100 are all adapted to the present invention, which can make different modifications and alterations accordingly.

In summary, in the prior art, when the components of the access device are damaged or the configuration of the access device is wrong, the service terminal requires to obtain the failure condition by the telephone first to decide whether to send someone to check the access device, which is very inconvenient. In comparison, the present invention utilizes the electronic device to communicate with the service terminal and the access device, and the electronic device may perform the process to communicate and transfer the information between the service terminal and the access device. Therefore, the service terminal may check the access device, and then the service terminal re-configure the access device, update the firmware of the access device, or replace the access device, etc, to rapidly repair the access device failure.

## Claims

1. A method (30) for repairing an access device (102) failure, wherein the access device (102) is utilized in a network access system, the method (30) **characterized by** the steps of:
executing an application program in an electronic device (104);
the application program obtaining a device information of the access device (102) and establishing a control connection (CCON) with the access device (102) according to the device information;
the application program establishing a service connection (SCON) with a service terminal (100) of the network access system and transmitting the device information to the service terminal (100); and
the application program transferring an operating information transmitted from the service terminal (100) to the access device (102) and transferring a response information transmitted from the access device (102) to the service terminal (100) by the control connection (CCON) and the service connection (SCON);
wherein the service terminal (100) transmits the operating information and receives the response information to check and control the access device (102) according to the device information, so as to repair the failure.

2. The method (30) of claim 1, further **characterized in that** the application program obtains the device information of the access device (102) by manual input from a user, or the application program obtains the device information of the access device (102) by analyzing an information image captured from a camera (206) of the electronic device (104).

3. The method (30) of claim 1 or 2, further **characterized in that** the step of the application program establishing the control connection (CCON) with the access device (102) according to the device information comprises:
the application program performing a security verification with the access device (102) according to a security information and the device information; and
the application program activating a manage mode of the access device (102) and establishing the control connection (CCON) with the access device (102);
the service terminal (100) checking and controlling the access device (102) by transmitting the operating information to the access device (102) when the access device (102) is executed in the manage mode.

4. The method (30) of any one of claims 1-3, further **characterized in that** the control connection (CCON) is established according to a standard of a network transmission protocol.

5. The method (30) of claim 4, further **characterized in that** the control connection (CCON) is established by wireless transmission according to a Wi-Fi™ standard, or the control connection (CCON) is established by wired transmission according to an Ethernet network standard.

6. The method (30) of any one of claims 1-5, further **characterized in that** the service connection (SCON) is established according to a mobile communication standard.

7. An electronic device (104), **characterized by** comprising:
a processor (200); and
a storage device (202), for storing a program code (204) which indicates to the processor (200) to perform a method (30) for repairing an access device (102) failure according to claim 1.

8. The electronic device (104) of claim 7, further **characterized in that** the electronic device (104) further comprises an input interface (208) configured for receiving manual input of a user to obtain the device information of the access device (102).

9. The electronic device (104) of claim 7 or 8, further **characterized in that** the electronic device (104) further comprises a camera (206) configured for capturing an information image.

10. The electronic device (104) of any one of claims 7-9, further **characterized in that** the method (30) further comprises the steps according to claim 3.

11. The electronic device (104) of any one of claims 7-10, further **characterized in that** the control connection (CCON) is established according to a standard of a network transmission protocol.

12. The electronic device (104) of claim 11, further **characterized in that** the control connection (CCON) is established by wireless transmission according to a Wi-Fi™ standard, or the control connection (CCON) is established by wired transmission according to an Ethernet network standard.

13. The electronic device (104) of any one of claims 7-12, further **characterized in that** the service connection (SCON) is established according to a mobile communication standard.

## Patentansprüche

1. Verfahren (30) zum Beheben eines Zugangsvorrichtungs-(102) fehlers, wobei die Zugangsvorrichtung (102) in einem Netzwerkzugangssystem verwendet wird, wobei das Verfahren (30) gekennzeichnet wird durch die Schritte:
Ausführen eines Anwenderprogramms in einer elektronischen Vorrichtung (104),
das Anwenderprogramm erhält eine Vorrichtungsinformation der Zugangsvorrichtung (102) und stellt eine Steuerverbindung (CCON) mit der Zugangsvorrichtung (102) gemäß der Vorrichtungsinformation her,
das Anwenderprogramm stellt eine Serviceverbindung (SCON) mit einem Serviceanschluss (100) des Netzwerkzugangssystems her und überträgt die Vorrichtungsinformation an den Serviceanschluss (100), und
das Anwenderprogramm überträgt eine Betriebsinformation, die von dem Serviceanschluss (100) an die Zugangsvorrichtung (102) übertragen wurde, und überträgt eine Antwortinformation, die von der Zugangsvorrichtung (102) an den Serviceanschluss (100) durch die Steuerverbindung (CCON) und die Serviceverbindung (SCON) übertragen wurde,
wobei der Serviceanschluss (100) die Betriebsinformation überträgt und die Antwortinformation erhält, um die Zugangsvorrichtung (102) gemäß der Vorrichtungsinformation zu überprüfen und zu steuern, um so den Fehler zu beheben.

2. Verfahren (30) nach Anspruch 1. ferner **dadurch gekennzeichnet, dass** das Anwenderprogramm die Vorrichtungsinformation der Zugangsvorrichtung (102) durch manuelle Eingabe eines Anwenders erhält, oder dass das Anwenderprogramm die Vorrichtungsinformation der Zugangsvorrichtung (102) durch Analyse eines Informationsbildes erhält, das durch eine Kamera (206) der elektronischen Vorrichtung (104) aufgenommen wurde.

3. Verfahren (30) nach Anspruch 1 oder 2, ferner **dadurch gekennzeichnet, dass** der Schritt des Herstellens der Steuerverbindung (CCON) mit der Zugangsvorrichtung (102) durch das Anwenderprogramm gemäß der Vorrichtungsinformation umfasst:
das Anwenderprogramm führt einen Sicherheitsnachweis mit der Zugangsvorrichtung (102) gemäß einer Sicherheitsinformation und der Vorrichtungsinformation durch, und
das Anwenderprogramm aktiviert einen Bewerkstelligungsmodus der Zugangsvorrichtung (102) und stellt eine Steuerverbindung (CCON) mit der Zugangsvorrichtung (102) her,
der Serviceanschluss (100) überprüft und steuert die Zugangsvorrichtung (102) durch Übertragen der Betriebsinformation an die Zugangsvorrichtung (102), wenn die Zugangsvorrichtung (102) im Bewerkstelligungsmodus betrieben wird.

4. Verfahren (30) nach einem der Ansprüche 1-3. ferner **dadurch gekennzeichnet, dass** die Steuerverbindung (CCON) gemäß einem Standard eines Netzwerkübertragungsprotokolls erstellt wird.

5. Verfahren (30) nach Anspruch 4, ferner **dadurch gekennzeichnet, dass** die Steuerverbindung (CCON) durch drahtlose Übertragung gemäß eines Wi-Fi^{™} Standards hergestellt wird, oder dass die Steuerverbindung (CCON) durch drahtgebundene Übertragung gemäß eines Ethernet-Netzwerkstandards hergestellt wird.

6. Verfahren (30) nach einem der Ansprüche 1-5, ferner **dadurch gekennzeichnet, dass** die Serviceverbindung (SCON) gemäß eines mobilen Kommunikationsstandards hergestellt wird.

7. Elektronische Vorrichtung (104) **dadurch gekennzeichnet, dass** sie umfasst:
Einen Prozessor (200), sowie
eine Speichervorrichtung (202) zum Speichern eines Programmcodes (204), der dem Prozessor (200) anzeigt, ein Verfahren (30) zum Beheben eines Zugangsvorrichtungs-(102) fehlers nach Anspruch 1 durchzuführen.

8. Elektronische Vorrichtung (104) nach Anspruch 7. ferner **dadurch gekennzeichnet, dass** die elektronische Vorrichtung (104) ferner eine Eingabeschnittstelle (208) umfasst, die angepasst ist, manuelle Eingaben eines Nutzers zu erhalten, um die Vorrichtungsinformation der Zugangsvorrichtung (102) zu erhalten.

9. Elektronische Vorrichtung (104) nach Anspruch 7 oder 8, ferner **dadurch gekennzeichnet, dass** die elektronische Vorrichtung (104) ferner eine Kamera (206) umfasst, die angepasst ist, ein Informationsbild aufzunehmen.

10. Elektronische Vorrichtung (104) nach einem der Ansprüche 7-9, ferner **dadurch gekennzeichnet, dass** das Verfahren (30) ferner die Schritte nach Anspruch 3 umfasst.

11. Elektronische Vorrichtung (104) nach einem der Ansprüche 7-10, ferner **dadurch gekennzeichnet, dass** die Steuerverbindung (CCON) gemäß einem Standard eines Netzwerkübertragungsprotokolls erstellt wird.

12. Elektronische Vorrichtung (104) nach Anspruch 11, ferner **dadurch gekennzeichnet, dass** die Steuerverbindung (CCON) durch drahtlose Übertragung gemäß eines Wi-Fi^{™} Standards hergestellt wird, oder dass die Steuerverbindung (CCON) durch drahtgebundene Übertragung gemäß eines Ethernet-Netzwerkstandards hergestellt wird.

13. Elektronische Vorrichtung (104) nach einem der Ansprüche 7-12, ferner **dadurch gekennzeichnet, dass** die Serviceverbindung (SCON) gemäß eines mobilen Kommunikationsstandards hergestellt wird.

## Revendications

1. Procédé (30) pour la réparation d'une défaillance d'un dispositif d'accès (102), dans lequel le dispositif d'accès (102) est utilisé dans un système d'accès réseau, le procédé (30) étant **caractérisé par** les étapes suivantes :
exécuter un programme d'application dans un dispositif électronique (104) ;
le programme d'application obtient des informations de dispositif du dispositif d'accès (102) et établit une connexion de commande (CCON) avec le dispositif d'accès (102) selon les informations de dispositif ;
le programme d'application établit une connexion de service (SCON) avec un terminal de service (100) du système d'accès réseau et transmet les informations de dispositif au terminal de service (100) ; et
le programme d'application transfère des informations de fonctionnement transmises du terminal de service (100) au dispositif d'accès (102) et transfère des informations de réponse transmises du dispositif d'accès (102) au terminal de service (100) par la connexion de commande (CCON) et la connexion de service (SCON) ;
dans lequel le terminal de service (100) transmet les informations de fonctionnement et reçoit les informations de réponse pour contrôler et commander le dispositif d'accès (102) selon les informations de dispositif, de façon à réparer la défaillance.

2. Procédé (30) selon la revendication 1, **caractérisé en outre en ce que** le programme d'application obtient les informations de dispositif du dispositif d'accès (102) par une saisie manuelle d'un utilisateur, ou le programme d'application obtient les informations de dispositif du dispositif d'accès (102) en analysant une image d'informations capturée par une caméra (206) du dispositif électronique (104).

3. Procédé (30) selon la revendication 1 ou 2, **caractérisé en outre en ce que** l'étape du programme d'application établissant la connexion de commande (CCON) avec le dispositif d'accès (102) selon les informations de dispositif comprend :
le programme d'application exécutant une vérification de sécurité avec le dispositif d'accès (102) selon des informations de sécurité et les informations de dispositif ; et
le programme d'application activant un mode de gestion du dispositif d'accès (102) et établissant la connexion de commande (CCON) avec le dispositif d'accès (102) ;
le terminal de service (100) vérifiant et commandant le dispositif d'accès (102) en transmettant les informations de fonctionnement au dispositif d'accès (102) lorsque le dispositif d'accès (102) est exécuté dans le mode de gestion.

4. Procédé (30) selon l'une quelconque des revendications 1 à 3, **caractérisé en outre en ce que** la connexion de commande (CCON) est établie selon une norme d'un protocole de transmission réseau.

5. Procédé (30) selon la revendication 4, **caractérisé en outre en ce que** la connexion de commande (CCON) est établie par une transmission sans fil selon une norme Wi-Fi^{™}, ou la connexion de commande (CCON) est établie par une transmission câblée selon une norme réseau Ethernet.

6. Procédé (30) selon l'une quelconque des revendications 1 à 5, **caractérisé en outre en ce que** la connexion de service (SCON) est établie selon une norme de communication mobile.

7. Dispositif électronique (104), **caractérisé en ce qu'**il comprend : un processeur (200) ; et
un dispositif de stockage (202), destiné au stockage d'un code de programme (204) qui indique au processeur (200) d'exécuter un procédé (30) pour la réparation d'une défaillance d'un dispositif d'accès (102) selon la revendication 1.

8. Dispositif électronique (104) selon la revendication 7, **caractérisé en outre en ce que** le dispositif électronique (104) comprend en outre une interface de saisie (208) conçue pour recevoir une saisie manuelle d'un utilisateur pour obtenir les informations de dispositif du dispositif d'accès (102).

9. Dispositif électronique (104) selon la revendication 7 ou 8, **caractérisé en outre en ce que** le dispositif électronique (104) comprend en outre une caméra (206) conçue pour capturer une image d'informations.

10. Dispositif électronique (104) selon l'une quelconque des revendications 7 à 9, **caractérisé en outre en ce que** le procédé (30) comprend en outre les étapes selon la revendication 3.

11. Dispositif électronique (104) selon l'une quelconque des revendications 7 à 10, **caractérisé en outre en ce que** la connexion de commande (CCON) est établie selon une norme d'un protocole de transmission réseau.

12. Dispositif électronique (104) selon la revendication 11, **caractérisé en outre en ce que** la connexion de commande (CCON) est établie par une transmission sans fil selon une norme Wi-Fi^{™}, ou la connexion de commande (CCON) est établie par une transmission câblée selon une norme réseau Ethernet.

13. Dispositif électronique (104) selon l'une quelconque des revendications 7 à 12, **caractérisé en outre en ce que** la connexion de service (SCON) est établie selon une norme de communication mobile.
